# EUROPEAN PATENT APPLICATION

(11) **EP 4 481 247 A1**
(43) Date of publication of application: **25.12.2024**
(21) Application number: 23756098.2
(22) Date of filing: 23.01.2023
(51) Int. Cl.: F16K 17/30, G05D 16/10

(54) **OVERFLOW PREVENTION VALVE AND TANK VALVE DEVICE PROVIDED WITH SAME**

(30) Priority: 17.02.2022 JP 2022023194
(71) Applicant: KAWASAKI JUKOGYO KABUSHIKI KAISHA, Kobe-shi, Hyogo 650-8670 (JP)
(72) Inventor: NINOMIYA, Makoto, Hyogo 6508670 (JP); OKAMOTO, Masayoshi, Hyogo 6508670 (JP); HAYASE, Tomoya, Hyogo 6508670 (JP); MUKAI, Koji, Hyogo 6508670 (JP)
(74) Representative: EIP
(86) International application number: PCT/JP2023/001909
(87) International publication number: WO 2023/157570

(57) **Abstract**

This excess flow valve includes: a housing including a valve chamber including a first opening and a second opening; a valve body that is housed in the valve chamber and is seated on and unseated from a valve seat located around the first opening, according to a difference between a fluid pressure at the first opening and a fluid pressure at the second opening; and a spring that biases the valve body to cause the valve body to be unseated from the valve seat. The valve body includes: an inner passage connected to the second opening; a communication passage connected to the inner passage and connected to the first opening via the valve chamber; and a throttle channel connected to the inner passage and facing the first opening. The channel area of the throttle channel is smaller than the channel area of the communication passage.

## Description

### Technical Field

The present invention relates to an excess flow valve that controls the flow of a gas and to a tank valve device provided with the excess flow valve.

### Background Art

Known examples of the excess flow valve include that disclosed in Patent Literature (PTL) 1. In the excess flow valve disclosed in PTL 1, when the difference in pressure between an inlet passage and an outlet passage increases, an excess flow prevention member switches to a valve-closing attitude. With this, it is possible to stop the outflow of the gas; in other words, it is possible to prevent an excess flow state. Furthermore, in the excess flow valve, after switching to the valve-closing attitude, the excess flow prevention member is pushed with a returning pushrod and thus returned to a valve-opening attitude. Thus, the excess flow valve can be returned.

### Citation List

### Patent Literature

PTL 1: Japanese Laid-Open Patent Application Publication No. 2007-278484

### Summary of Invention

### Technical Problem

In the excess flow valve disclosed in PTL 1, after the excess flow prevention member assumes the valve-closing attitude, the pressure on the downstream side of a valve body is maintained at low pressure, for example, at atmospheric pressure. Therefore, the excess flow prevention member is maintained at the valve-closing attitude. Therefore, at the time of returning the excess flow prevention member to the valve-opening attitude, it is necessary to push the excess flow prevention member with the returning pushrod. However, in the excess flow valve, there is a demand for automatic return of the excess flow prevention member to the valve-opening attitude, that is, movement of the valve body from a valve seat, after the excess flow state is resolved.

Thus, an object of the present invention is to provide an excess flow valve including a valve body capable of moving away from a valve seat after an excess flow state is resolved.

### Solution to Problem

An excess flow valve according to the present invention includes: a housing including a valve chamber including a first opening and a second opening; a valve body that is housed in the valve chamber and is seated on and unseated from a valve seat according to a difference between a fluid pressure at the first opening and a fluid pressure at the second opening, the valve seat being located around the first opening; and a spring that biases the valve body to cause the valve body to be unseated from the valve seat, wherein: the valve body includes: an inner passage connected to the second opening; a communication passage connected to the inner passage and connected to the first opening via the valve chamber; and a throttle channel connected to the inner passage and facing the first opening; and a channel area of the throttle channel is smaller than a channel area of the communication passage.

According to the present invention, in the excess flow state where the fluid pressure at the first opening is reduced, the difference in pressure increases, and therefore the valve body is seated on the valve seat. Thus, it is possible to prevent the transition to the excess flow state. Meanwhile, in the excess flow valve, since the throttle channel faces the first opening and the channel area is smaller than that of the communication passage, the fluid can be brought to the first opening at a low flow rate even when the valve is closed. Therefore, it is possible to reduce the pressure in difference while inhibiting the transition to the excess flow state. As a result, the valve body can be unseated from the valve seat after the excess flow state is resolved.

A tank valve device according to the present invention seals a tank in which a gas is stored, controls a flow of the gas that flows out of the tank, and includes: the excess flow valve described above; and the bleed valve that releases, to an atmosphere, the gas that flows in the gas passage.

According to the present invention, when the bleed valve is actuated, the pressure in the gas passage drops, but it is possible to prevent the excess flow valve from being actuated due to the pressure drop. Thus, undesired actuation of the excess flow valve can be mitigated.

### Advantageous Effects of Invention

According to the present invention, a valve body can be unseated from a valve seat after an excess flow state is resolved.

The above object, other objects, features, and advantages of the present invention will be made clear by the following detailed explanation of preferred embodiments with reference to the attached drawings.

### Brief Description of Drawings

[Fig. 1] Fig. 1 is a front view illustrating a tank valve device according to the present invention.
[Fig. 2] Fig. 2 is an enlarged cross-sectional view of an excess flow valve included in the tank valve device illustrated in Fig. 1.
[Fig. 3] Fig. 3 is an exploded view of the excess flow valve illustrated in Fig. 2.
[Fig. 4] Fig. 4 is an enlarged cross-sectional view illustrating the flow of a gas when the excess flow valve illustrated in Fig. 2 is in an open state.
[Fig. 5] Fig. 5 is an enlarged cross-sectional view illustrating the flow of a gas when the excess flow valve illustrated in Fig. 2 is in a closed state.

### Description of Embodiments

Hereinafter, a tank valve device 1 according to an embodiment of the present invention and an excess flow valve 11 included in the tank valve device 1 will be described with reference to the aforementioned drawings. Note that the concept of directions mentioned in the following description is used for the sake of explanation; the orientations, etc., of elements according to the invention are not limited to these directions. The tank valve device 1 and the excess flow valve 11 described below are merely one embodiment of the present invention. Thus, the present invention is not limited to the following embodiments and may be subject to addition, deletion, and alteration within the scope of the essence of the invention.

### <Tank Valve Device>

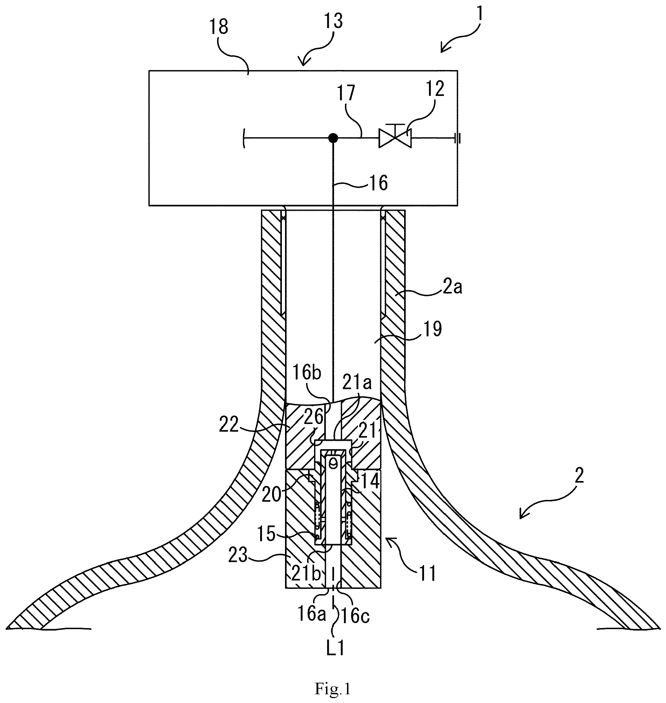

The tank valve device 1 illustrated in Fig. 1 includes an excess flow valve 11 and a bleed valve 12. The tank valve device 1 is provided on a tank 2 in which a gas is stored. The tank valve device 1 seals a mouth part 2a of the tank 2. In the present embodiment, the gas is hydrogen. Note that the gas is not limited to hydrogen. The tank valve device 1 is a tank valve device of the on-tank valve type. In the tank valve device 1, the gas is delivered from the tank 2. The tank valve device 1 controls the flow of the gas to be delivered.

### <Excess Flow Valve>

The excess flow valve 11 includes a valve block 13, a valve body 14, and a spring 15. The excess flow valve 11 is a valve that controls the flow of a fluid in an excess flow state where the fluid flows at no less than a predetermined flow rate as a result of a decrease in the fluid pressure on the downstream side. In the present embodiment, in the case where a gas that is one example of the fluid is delivered from the tank 2 at no less than the predetermined flow rate, the excess flow valve 11 limits the flow rate of the gas to be delivered from the tank 2.

### <Valve Block>

The valve block 13, which is one example of the housing, includes a main passage 16 and a depressurization passage 17. The valve block 13 is inserted to the mouth part 2a of the tank 2. More specifically, the valve block 13 is screwed on the mouth part 2a of the tank 2. Thus, the mouth part 2a is sealed by the valve block 13.

The main passage 16, which is one example of the gas passage, connects the inside and the outside of the tank 2. More specifically, the main passage 16 includes a supply port (not illustrated in the drawings) and a delivery port 16a. The supply port is formed on the valve block 13, outside the tank 2. The supply port is connected to gas consumers such as a fuel cell and an internal combustion engine through piping, for example. The delivery port 16a is formed on the tank 2. The gas in the tank 2 flows into the delivery port 16a. The depressurization passage 17 is a passage for releasing gas pressure from the tank 2. The depressurization passage 17 is connected to the inside of the tank 2 via the main passage 16 and also connected to the outside of the tank 2.

The valve block 13 further includes a block body 18, a plug part 19, and a guide member 20.

### <Block Body>

In the valve block 13, the block body 18 protrudes from the tank 2. The block body 18 includes the main passage 16 and the depressurization passage 17. The block body 18 includes a plurality of valves including the bleed valve 12. The plurality of valves include a solenoid on-off valve and a manual valve in addition to the bleed valve 12. The solenoid on-off valve and the manual valve are interposed in the main passage 16. Note that the plurality of valves do not necessarily need to include the solenoid on-off valve and the manual valve and may include valves other than the solenoid on-off valve and the manual valve, such as a check valve and a safety valve, for example.

### <Plug Part>

The plug part 19 is provided integrally with the block body 18. The plug part 19 is inserted into the mouth part 2a in a sealed state. In the present embodiment, the plug part 19 is screwed on the mouth part 2a. The plug part 19 is formed in the shape of a circular column and extends in an axial direction. In the present embodiment, the axial direction is a direction in which an axial line L1 of the plug part 19 extends. The plug part 19 is inserted through the mouth part 2a in such a manner that the axial line L 1 matches the axial line of the mouth part 2a.

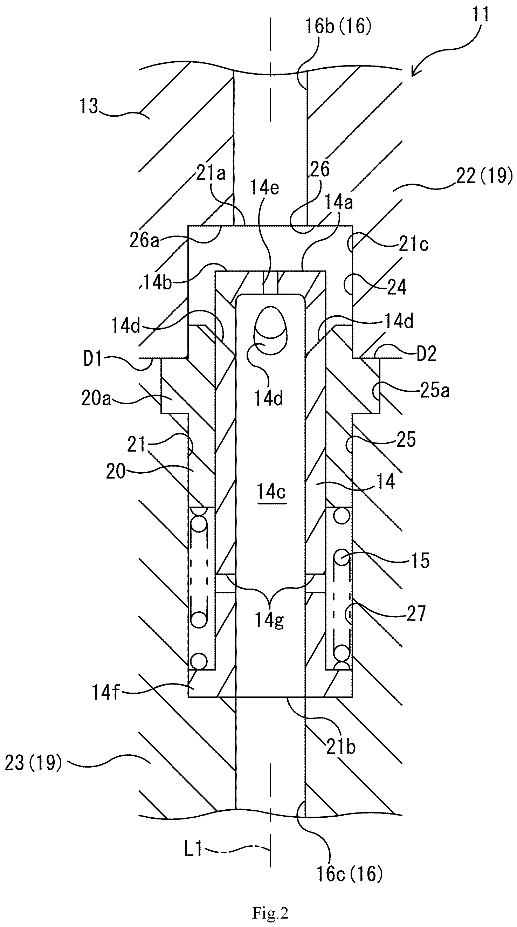

The plug part 19 includes the main passage 16 and the valve chamber 21, as illustrated in Fig. 2. The main passage 16 extends from the block body 18 to the plug part 19. More specifically, the main passage 16 extends in the axial direction in the plug part 19. The main passage 16 includes the delivery port 16a at one axial end that is an end surface on one side in the axial direction of the plug part 19, and is open to the tank 2 at one axial end of the plug part 19. The valve chamber 21 is interposed in main passage 16. The main passage 16 is divided by the valve chamber 21 as a first passage portion 16b and a second passage portion 16c. The first passage portion 16b is a portion of the main passage 16 that is located closer to the supply port than the valve chamber 21 is, and the second passage portion 16c is a portion of the main passage 16 that is located closer to the delivery portion 16a than the valve chamber 21 is.

The valve chamber 21 is interposed between the first passage portion 16b and the second passage portion 16c as mentioned above. The valve chamber 21 extends in the axial direction and is formed so as to be greater in diameter than the main passage 16. The valve chamber 21 includes a first opening 21a and a second opening 21b. The first opening 21a and the second opening 21b are formed at opposite axial ends (the ceiling and the bottom surface to be described later) of the valve chamber 21. The first opening 21a is connected to the first passage portion 16b, and the second opening 21b is connected to the second passage portion 16c.

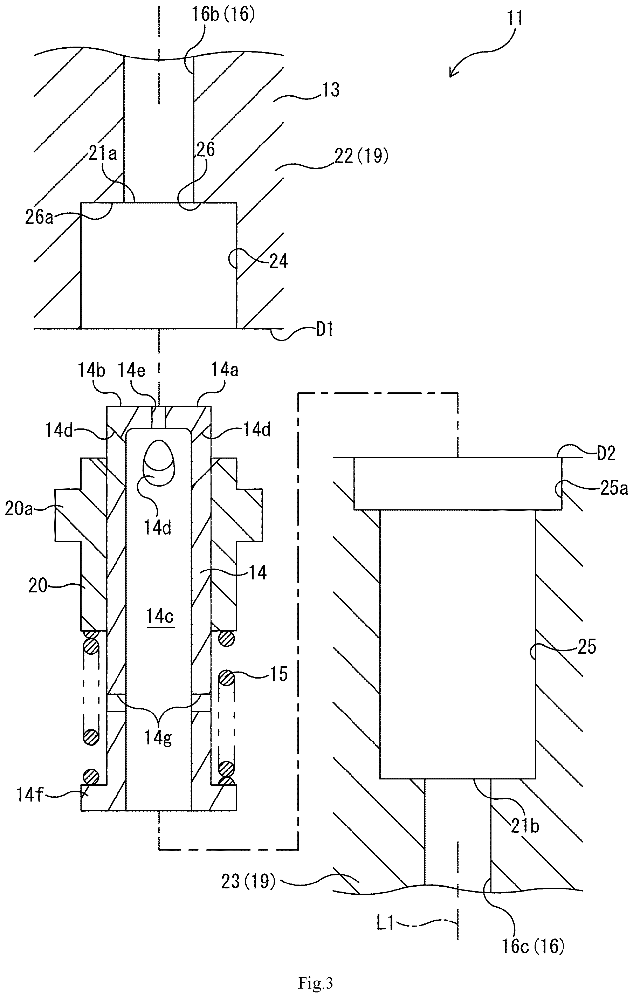

The plug part 19 includes a first plug body 22 and a second plug body 23. The first plug body 22, which is one example of the first housing body, is a portion on the other side in the axial direction. The second plug body 23, which is one example of the second housing body, is a portion on one side in the axial direction. The plug part 19 is divided by dividing planes D1, D2 as the first plug body 22 and the second plug body 23, as illustrated in Fig. 3. The dividing plane D1 and the dividing plane D2 are an end surface of the first plug body 22 and an end surface of the second plug body 23, respectively. In the present embodiment, the dividing planes D1, D2 are planes perpendicular to the axial line L1. Note that the dividing planes D1, D2 may be stepwise and the shapes thereof are not limited. The configurations of the first plug body 22 and the second plug body 23 will be described in further detail below.

The first plug body 22 is provided integrally with the block body 18. The first plug body 22 extends on one side in the axial direction from the block body 18 and is formed in the shape of a circular column. The first plug body 22 includes a first recess 24 and the first passage portion 16b. The first recess 24 is formed at one axial end of the first plug body 22 (that is, on the dividing plane D1). The first recess 24 is depressed on the other side in the axial direction from one axial end of the first plug body 22. In the first recess 24, the first opening 21a is open on a surface on the other side in the axial direction (which is referred to as "the ceiling" in the present embodiment). The axial line of the first recess 24 and the axial line of the first opening 21a match each other. The bore diameter of the first recess 24 is greater than the bore diameter of the first opening 21a. Therefore, a portion of the ceiling of the first recess 24 that is located around the first opening 21a forms a valve seat 26. The valve seat 26 includes a flat contact surface 26a. Note that the valve seat 26 may be a ring-shaped projecting piece protruding on one side in the axial direction; it is sufficient that the valve seat 26 be shaped so that the valve body 14 to be described later can be seated on the valve seat 26.

The first passage portion 16b is connected to the first recess 24 via the first opening 21a. From the first opening 21a, the first passage portion 16b extends parallel to the axial line L1, on the other side in the axial direction. The first passage portion 16b extends to the block body 18 through the first plug body 22.

The second plug body 23 extends in the axial direction and is formed in the shape of a circular column. The second plug body 23 includes a second recess 25. The second plug body 23 includes the delivery port 16a and the second passage portion 16c. The second recess 25 is formed at the other axial end of the second plug body 23 (that is, on the dividing plane D2). The second recess 25 is depressed on one side in the axial direction from the other axial end of the second plug body 23. In the second recess 25, the second opening 21b is open on a surface on one side in the axial direction (which is referred to as "the bottom surface" in the present embodiment). The axial line of the second recess 25 and the axial line of the second opening 21b match each other. An opening-end portion 25a of the second recess 25 is formed so as to be greater in diameter than a portion located closer to the bottom than the opening-end portion 25a is.

The delivery port 16a is formed at one axial end of the second plug body 23. The second passage portion 16c is connected to the second recess 25 via the second opening 21b. From the first opening 21a, the second passage portion 16c extends parallel to the axial line L1, on one side in the axial direction. The second passage portion 16c is connected to the delivery port 16a (refer to Fig. 1).

In the plug part 19, the first plug body 22 and the second plug body 23 are disposed as follows. Specifically, the first plug body 22 and the second plug body 23 are placed so that the first recess 24 and the second recess 25 face each other, as illustrated in Fig. 2. The first plug body 22 and the second plug body 23 are disposed so that the axial lines thereof match the axial line L 1 and the dividing plane D 1 of the first plug body 22 and the dividing plane D2 of the second plug body 23 face each other. The first plug body 22 and the second plug body 23 are fastened together with fastening members not illustrated in the drawings such as bolts. Thus, the first plug body 22 and the second plug body 23 form the plug part 19. Furthermore, the first recess 24 and the second recess 25 form the valve chamber 21 in the plug part 19.

### <Guide Member>

The guide member 20 is housed in the valve chamber 21. The guide member 20 is formed in the shape of a circular cylinder. The guide member 20 includes a flange 20a on an outer peripheral surface. The flange 20a is formed along the entire perimeter of a portion of the guide member 20 that is located in the middle in the axial direction. The flange 20a projects radially outward. The flange 20a fits into the opening-end portion 25a of the second recess 25. The flange 20a is held between the two plug bodies 22, 23. Thus, the guide member 20 is fixed inside the valve chamber 21.

The guide member 20 is shorter than the valve chamber 21 in a first axial direction. Therefore, the guide member 20 is spaced apart in the axial direction from the opposite axial ends of the valve chamber 21 (specifically, the ceiling of the first recess 24 and the bottom surface of the second recess 25). Thus, the guide member 20 forms a valve space 21c on the other side of the guide member 20 in the axial direction in the valve chamber 21, and further forms a spring housing space 27, which will be described in detail later, on the other side of the guide member 20 in the axial direction.

### <Valve Body>

The valve body 14 is housed in the valve chamber 21. According to the difference between a gas pressure at the first opening 21a and a gas pressure at the second opening 21b, the valve body 14 is seated on and unseated from the valve seat 26 located around the first opening 21a. More specifically, the valve body 14 is housed in the valve chamber 21 so as to be movable in the axial direction. The valve body 14 is subjected to the gas pressures at the first opening 21a and the second opening 21b that oppose each other. The valve body 14 moves to a position corresponding to the difference between the two gas pressures. As a result of the movement of the valve body 14, the first opening 21a is opened and closed. The configuration of the valve body 14 will be described in further detail below.

The valve body 14 is inserted through the guide member 20. The valve body 14 is slidably guided in the axial direction by the guide member 20. The valve body 14 is formed in the shape of a circular cylinder. The valve body 14 includes a seat portion 14a. An upper surface portion of the valve body 14 constitutes the seat portion 14a. The valve body 14 is disposed so that the seat portion 14a faces the first opening 21a. By moving on the other side in the axial direction, the valve body 14 causes the seat portion 14a to be seated on the valve seat 26. As a result, the first opening 21a is closed. By moving on one side in the axial direction, the valve body 14 causes the seat portion 14a to be unseated from the valve seat 26. As a result, the first opening 21a is opened.

The seat portion 14a includes a contact surface 14b that abuts the valve seat 26. The contact surface 14b is flat as with the contact surface 26a of the valve seat 26. The valve body 14 closes the first opening 21a by causing the contact surface 14b of the seat portion 14a to abut the contact surface 26a of the valve seat 26.

The valve body 14 includes an inner passage 14c, a plurality of communication passages 14d, and a throttle channel 14e. The inner passage 14c is connected to the second opening 21b. More specifically, the inner passage 14c is an inner hole of the valve body 14 and has the ceiling. The inner passage 14c extends along the axial line L1. An opening end of the inner passage 14c faces the second opening 21b. Therefore, the inner passage 14c is connected to the second opening 21b.

The communication passage 14d is connected to the inner passage 14c and is in communication with the first opening 21a via the valve chamber 21. More specifically, a plurality of communication passages 14d, for example, four communication passages 14d, are formed in the valve body 14. The plurality of communication passages 14d are arranged on ceiling-end portions of the outer peripheral surface of the valve body 14. The plurality of communication passages 14d are equally spaced apart from each other in the circumferential direction on the outer peripheral surface of the valve body 14. Each of the communication passages 14d radially extends through the valve body 14. Thus, the communication passage 14d is connected to each of the inner passage 14c and the outside of the valve body 14 (that is, the valve space 21c). By being connected to the valve space 21c, the communication passage 14d is in communication with the first opening 21a via the valve chamber 21.

The throttle channel 14e is connected to the inner passage 14c as with the communication passage 14d, and faces the first opening 21a. The throttle channel 14e is formed on the seat portion 14a of the valve body 14. In the present embodiment, the throttle channel 14e extends through the seat portion 14a along the axial line L 1. Therefore, the throttle channel 14e includes openings at both the upper surface (that is, the outer surface) and the ceiling (that is, the inner surface) of the valve body 14. The outer opening of the throttle channel 14e that is located on the outer surface of the valve body 14 faces the first opening 21a. The inner opening of the throttle channel 14e that is located on the inner surface of the valve body 14 is connected to the inner passage 14c. The channel area of the throttle channel 14e is smaller than the channel area of the communication passage 14d. Therefore, the throttle channel 14e is configured to lower the flow rate of the gas as compared to the communication passage 14d.

The valve body 14 includes a spring bearing 14f and a vent passage 14g. The valve body 14 forms the spring housing space 27 between the valve block 13 and the valve body 14. The spring bearing 14f is formed along the entire perimeter of one axial end portion of the valve body 14. The spring bearing 14f projects radially outward from the one axial end portion of the valve body 14. The spring bearing 14f is spaced apart from one axial end of the guide member 20 on one side in the axial direction in the valve chamber 21. With the guide member 20, the valve body 14 is radially spaced apart from block body 18. Therefore, the valve body 14 forms the ring-shaped spring housing space 27 between the block body 18 and the valve body 14, in an area closer to the second opening 21b (that is, on one side in the axial direction) than the guide member 20 is in the valve chamber 21.

The vent passage 14g is in communication with the spring housing space 27 and the inner passage 14c. More specifically, a plurality of vent passages 14g are formed spaced apart from each other in the circumferential direction on the outer peripheral surface of the valve body 14. The vent passage 14g is disposed on the outer peripheral surface of the valve body 14 so as to correspond to the spring housing space 27. The vent passage 14g radially extends through the valve body 14 from the inside to the outside thereof. Thus, the vent passage 14g is in communication with the spring housing space 27 and the inner passage 14c.

### <Spring>

The spring 15 biases the valve body 14. The spring 15 moves the valve body 14 away from the valve seat 26. In the present embodiment, the spring 15 is a helical compression spring. The spring 15 is provided on the exterior of the valve body 14 and is housed in the spring housing space 27. More specifically, the spring 15 is compressed when disposed between the guide member 20 and the spring bearing 14f. Therefore, the spring 15 biases the valve body 14 so that the valve body 14 is unseated from the valve seat 26. In other words, the spring 15 biases the valve body 14 against the gas pressure at the second opening 21b.

### <Bleed Valve>

The bleed valve 12 is connected to the main passage 16. The bleed valve 12 is interposed in the depressurization passage 17. The bleed valve 12 is connected to the main passage 16 via the depressurization passage 17. The bleed valve 12 releases, to the atmosphere, the gas flowing in the main passage 16. The bleed valve 12 is a valve that is actuated by manual operation. By being manually operated, the bleed valve 12 opens the depressurization passage 17. Thus, the gas flowing in the main passage 16 is released to the atmosphere. When the gas is released to the atmosphere, the gas pressure in the main passage 16 drops. The maximum opening degree of the bleed valve 12 is adjusted so that the valve body 14 of the excess flow valve 11 remains in an open valve state when the pressure in the main passage 16 drops at the time of the release. For example, the maximum opening degree of the bleed valve 12 is set so that the difference between the gas pressure at the first opening 21a and the gas pressure at the second opening 21b becomes less than or equal to a predetermined pressure to be described later. Note that the maximum opening degree of the bleed valve 12 may be adjusted so that the valve body 14 of the excess flow valve 11 is placed in a closed valve state. In this case, it is possible to keep the excess flow valve 11 from falling into an unintentional excess flow state due to, for example, a quick operation of the bleed valve 12.

### <Operation of Excess Flow Valve>

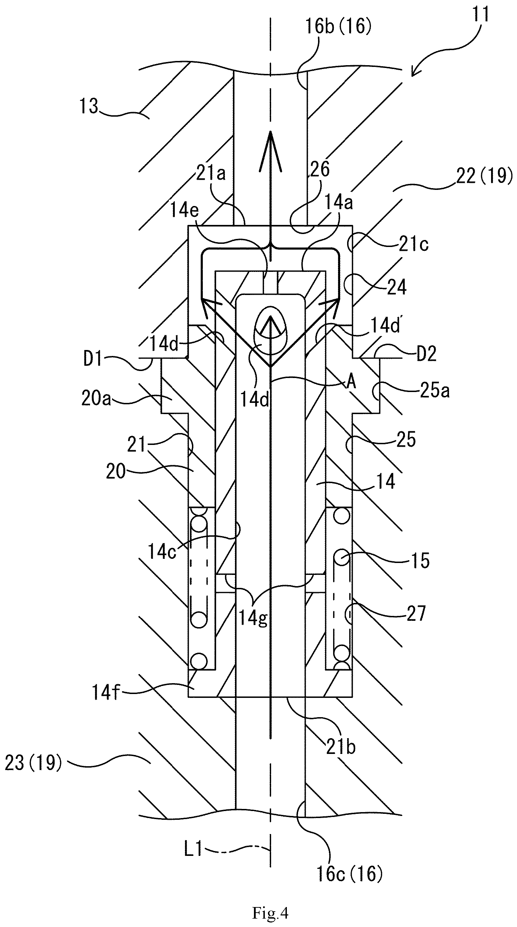

In the excess flow valve 11, when the flow rate of the gas being delivered from the tank 2 is less than or equal to a predetermined flow rate, the difference between the gas pressure at the first opening 21a and the gas pressure at the second opening 21b is less than or equal to the predetermined pressure. Herein, the predetermined pressure is a pressure corresponding to the biasing force of the spring 15. With the spring 15, the valve body 14 is unseated from the valve seat 26 in the state where the difference in pressure is less than or equal to the predetermined pressure. The valve body 14 is held at an open position such as that illustrated in Fig. 4 at which the seat portion 14a is unseated from the valve seat 26. In the excess flow valve 11, the gas in the tank 2 is brought from the second passage portion 16c to the valve chamber 21 via the second opening 21b and further flows into the inner passage 14c. In the state where the valve body 14 is held at the open position, the gas that has flown into the inner passage 14c flows to the valve space 21c mainly through the plurality of communication passages 14d (refer to the arrow A in Fig. 4). The gas brought to the valve space 21c is delivered to the first passage portion 16b via the first opening 21a. The gas brought to the second opening 21b flows to the first opening 21a through the plurality of communication passages 14d. Since the channel area of the communication passage 14d is greater than the channel area of the throttle channel 14e, flowing through the communication passage 14d makes it possible to reduce the pressure loss of the gas that occurs when the valve is open.

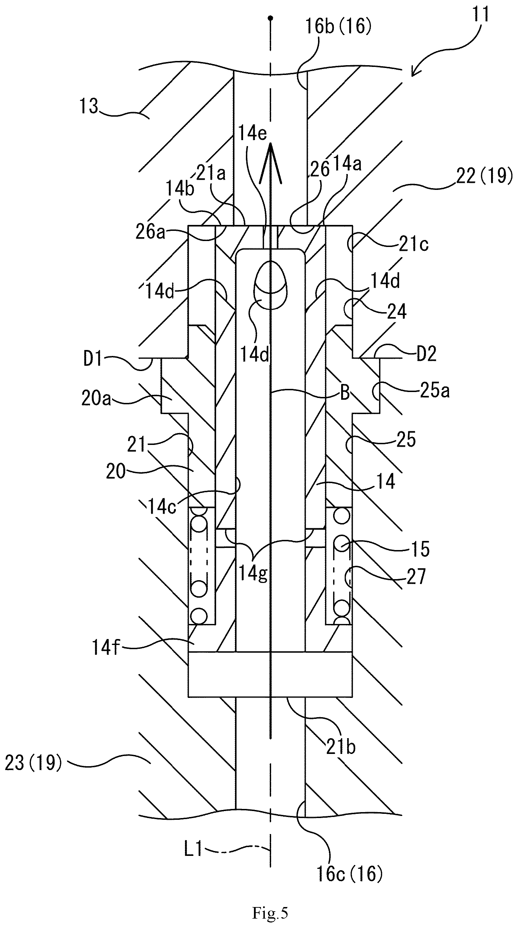

If the main passage 16 is connected to the atmosphere due to damage, etc., to the piping (not illustrated in the drawings) connected to the main passage 16, the flow rate of the gas being delivered from the tank 2 may exceed the predetermined flow rate in the excess flow valve 11. In this excess flow state, the gas pressure at the first opening 21a is significantly lower than the gas pressure at the second opening 21b, and thus the difference between the gas pressure at the first opening 21a and the gas pressure at the second opening 21b exceeds the predetermined pressure. Thus, the valve body 14 is pushed toward the valve seat 26 by the gas pressure at the second opening 21b. As a result, the valve body 14 is seated on the valve seat 26, as illustrated in Fig. 5. Furthermore, the first opening 21a is closed by the valve body 14. Thus, it is possible to prevent an excessive amount of gas from being delivered from the tank 2.

In the excess flow valve 11, the throttle channel 14e is connected to the first opening 21a even when the valve is closed with the first opening 21a closed by the valve body 14. Therefore, the gas flowing through the second opening 21b is delivered to the first opening 21a via the throttle channel 14e (refer to the arrow B in Fig. 5). Thus, in order to resolve the excess flow state, the gas can be brought to the first opening 21a at a low flow rate even when the valve is closed, and the gas pressure at the second opening 21b can be gradually reduced. This makes it possible to reduce the difference in pressure to the predetermined pressure or less while suppressing the excess flow state. When the difference in pressure becomes the predetermined pressure or less, the spring 15 causes the valve body 14 to be unseated from the valve seat 26 and thus, the valve body 14 returns to the open position again. As a result, the first opening 21a is opened. In this manner, after the difference in pressure is reduced from that in the excess flow state to the predetermined pressure or less (that is, after the excess flow state is resolved), the valve body 14 can be unseated from the valve seat 26.

In the tank valve device 1, during a depressurization operation in which the gas flowing in the main passage 16 is released to the atmosphere by the bleed valve 12, the excess flow valve 11 operates as follows. When the bleed valve 12 is operated, the gas flowing in the main passage 16 is released to the atmosphere via the depressurization passage 17. Thus, the gas pressure in the main passage 16 drops. In other words, the gas pressure at the first opening 21a drops. The maximum opening degree of the bleed valve 12 is set so that the difference between the gas pressure at the first opening 21a and the gas pressure at the second opening 21b becomes less than or equal to the predetermined pressure. Therefore, with the spring 15, the valve body 14 remains in the open valve state when the pressure in the main passage 16 drops. Thus, it is possible to keep the first opening 21a from being closed by the excess flow valve 11 at the time of removing the gas from the tank 2 via the main passage 16, meaning that it is possible to quickly remove the gas from the tank 2.

With the excess flow valve 11 according to the present embodiment, in the excess flow state where the fluid pressure, that is, the gas pressure, at the first opening 21a is reduced, the difference in pressure increases, and thus the valve body 14 is seated on the valve seat 26. Thus, the excess flow state can be prevented. Meanwhile, in the excess flow valve 11, the throttle channel 14e faces the first opening 21a, and the channel area of the throttle channel 14e is smaller than the channel area of the communication passage 14d, and thus the gas can be brought to the first opening 21a at a low flow rate even when the valve is closed. Therefore, it is possible to reduce the difference in pressure while suppressing the excess flow state. Thus, after the excess flow state is resolved, the valve body 14 can be unseated from the valve seat 26.

Furthermore, with the excess flow valve 11 according to the present embodiment, because at least one of the contact surfaces 14b, 26a is formed flat, the contact surface 14b can properly abut the valve seat 26 even when the axis of the valve body 14 disposed is offset relative to the first opening 21a. Therefore, even when the accuracy of positioning, machining, or the like is low, the valve body 14 can be kept from partially contacting the valve seat 26 when being seated thereon.

Furthermore, with the excess flow valve 11 according to the present embodiment, because both the contact surfaces 26a, 14b of the valve seat 26 and the seat portion 14a are formed flat, the level of tolerance for the valve body 14 to have an offset axis can be further improved.

Furthermore, with the excess flow valve 11 according to the present embodiment, the valve chamber 21 can be formed by merely placing the first plug body 22 and the second plug body 23 so that the first recess 24 and the second recess 25 face each other. Furthermore, at the time of facing positioning of the first recess 24 and the second recess 25, the axes of the valve body 14 and the valve seat 26 are likely to be offset relative to each other, but because at least one of the contact surfaces 14b, 26a of the valve seat 26 and the valve body 14 is flat, the valve body 14 can be kept from partially contacting the valve seat 26 when being seated thereon. Therefore, in the valve block 13, the valve chamber 21 can be easily formed.

Furthermore, with the excess flow valve 11 according to the present embodiment, because the spring 15 is disposed in the spring housing space 27 formed outside the valve body 14, the spring 15 can be kept from being exposed to the gas flowing in the inner passage 14c. Thus, it is less likely that the spring 15 will be damaged, for example, due to being exposed to the gas.

Furthermore, with the excess flow valve 11 according to the present embodiment, the spring housing space 27 can be easily formed using the guide member 20.

Furthermore, with the excess flow valve 11 according to the present embodiment, because the vent passage 14g is formed, it is possible to reduce the damping effect in the spring housing space 27 at the time of extension or contraction of the spring 15. This allows the valve body 14 to smoothly move.

Furthermore, with the excess flow valve 11 according to the present embodiment, it is possible to prevent the excess flow valve 11 from being actuated at the time of a pressure drop in the main passage 16 when the bleed valve 12 is actuated. Thus, the excess flow valve 11 can be kept from being undesirably actuated.

Furthermore, with the tank valve device 1 according to the present embodiment, although the pressure in the main passage 16 drops when the bleed valve 12 is actuated, it is possible to prevent the excess flow valve 11 from being actuated due to the pressure drop. Thus, the excess flow valve 11 can be kept from being undesirably actuated.

### <Other Embodiments>

In the excess flow valve 11 according to the present embodiment, the fluid flowing therein is a gas, but is not limited to the gas. The fluid flowing therein may be a liquid such as oil or water. Furthermore, the excess flow valve 11 does not necessarily need to be included in the tank valve device 1 and may be included in other fluid supply devices such as a gas supply device. This means that an object in which the excess flow valve 11 is included is not limited to the tank valve device 1.

Furthermore, in the excess flow valve 11 according to the present embodiment, the valve block 13 does not necessarily need to include the guide member 20. For example, in the plug part 19 of the valve block 13, an inward flange projecting radially inward is formed instead of the guide member 20. The valve body 14 is slidably inserted through the inward flange. Thus, it is possible to achieve substantially the same functions as those achieved by the guide member 20.

Furthermore, the tank valve device 1 according to the present embodiment includes only the function of delivering the gas, but may also include the function of introducing the gas. For example, the tank valve device 1 may be configured to introduce the gas into the tank 2 via the main passage 16. In this case, in the excess flow valve 11, the gas to be introduced is brought to the first opening 21a and thus, with the gas brought thereto, the valve body 14 is held at the open position. Therefore, in the tank valve device 1, the gas can be introduced from the main passage 16 into the tank 2. Furthermore, the tank valve device 1 according to the present embodiment includes the bleed valve 12, but does not necessarily need to include the bleed valve 12.

From the foregoing description, many modifications and other embodiments of the present invention would be obvious to a person having ordinary skill in the art. Therefore, the foregoing description should be interpreted only as an example and is provided for the purpose of teaching the best mode for carrying out the present invention to a person having ordinary skill in the art. Substantial changes in details of the structures and/or functions of the present invention are possible within the spirit of the present invention.

### Reference Signs List

- 1: tank valve device
- 2: tank
- 11: excess flow valve
- 12: bleed valve
- 13: valve block (housing)
- 14: valve body
- 14a: seat portion
- 14b: contact surface
- 14c: inner passage
- 14d: communication passage
- 14e: throttle channel
- 14g: vent passage
- 15: spring
- 16: main passage (gas passage)
- 19: plug part (housing body)
- 20: guide member
- 21: valve chamber
- 21a: first opening
- 21b: second opening
- 22: first plug body (first housing body)
- 23: second plug body (second housing body)
- 24: first recess
- 25: second recess
- 26: valve seat
- 26a: contact surface
- 27: spring housing space

## Claims

1. An excess flow valve comprising:
a housing including a valve chamber including a first opening and a second opening;
a valve body that is housed in the valve chamber and is seated on and unseated from a valve seat according to a difference between a fluid pressure at the first opening and a fluid pressure at the second opening, the valve seat being located around the first opening; and
a spring that biases the valve body to cause the valve body to be unseated from the valve seat, wherein:
the valve body includes: an inner passage connected to the second opening; a communication passage connected to the inner passage and connected to the first opening via the valve chamber; and a throttle channel connected to the inner passage and facing the first opening; and
a channel area of the throttle channel is smaller than a channel area of the communication passage.

2. The excess flow valve according to claim 1, wherein:
the valve body includes a seat portion that is seated on the valve seat;
at least one of the valve seat and the seat portion includes a contact surface that abuts the other of the valve seat and the seat portion; and
the contact surface is flat.

3. The excess flow valve according to claim 2, wherein:
each of the valve seat and the seat portion includes the contact surface that is flat.

4. The excess flow valve according to any one of claims 1 to 3, wherein:
the housing includes: a first housing body including a first recess in which the first opening is open; and a second housing body including a second recess in which the second opening is open, and the valve chamber is formed by placing the first housing body and the second housing body so that the first recess and the second recess face each other.

5. The excess flow valve according to any one of claims 1 to 4, wherein:
the valve body forms a spring housing space in the shape of a ring between the housing and the valve body; and
the spring is provided on an exterior of the valve body and housed in the spring housing space.

6. The excess flow valve according to claim 5, wherein:
the housing includes: a housing body including the valve chamber; and a guide member that is housed in the valve chamber; and
the valve body is inserted through the guide member and forms the spring housing space between the housing body and the valve body, in an area closer to the second opening than the guide member is in the valve chamber.

7. The excess flow valve according to claim 6, wherein:
the valve body includes a vent passage that allows communication between the spring housing space and the inner passage.

8. The excess flow valve according to any one of claims 1 to 6, wherein:
the housing includes a gas passage that is connected to the first opening and in which a gas that is a fluid flows;
the gas passage is connected to a bleed valve that releases, to an atmosphere, the gas flowing in the gas passage; and
the spring places the valve body in an open valve state when a pressure in the gas passage drops during release of the gas by the bleed valve.

9. A tank valve device that seals a tank in which a gas is stored and controls a flow of the gas that flows out of the tank, the tank valve device comprising:
the excess flow valve according to claim 8; and
the bleed valve that releases, to the atmosphere, the gas that flows in the gas passage.
